# EUROPEAN PATENT APPLICATION

(11) **EP 4 424 814 A1**
(43) Date of publication of application: **04.09.2024**
(21) Application number: 22894683.6
(22) Date of filing: 09.11.2022
(51) Int. Cl.: C12M 1/38, C12M 1/36, C12M 1/34, C12M 1/02, C12M 1/00

(54) **INTEGRATED DIGITAL PCR INSTRUMENT AND CONTROL METHOD THEREFOR**

(30) Priority: 20.11.2021 CN 202111381197
(71) Applicant: Targetingone Technology (Beijing) Corporation, Beijing 102200 (CN)
(72) Inventor: SU, Shisheng, Beijing 102200 (CN); LIU, Jinwei, Beijing 102200 (CN); XU, Bo, Beijing 102200 (CN); HAN, Yingmin, Beijing 102200 (CN); ZHOU, Haiyu, Beijing 102200 (CN); DU, Xiaochun, Beijing 102200 (CN); LIU, Xiaobin, Beijing 102200 (CN); YANG, Wenjun, Beijing 102200 (CN); WANG, Yongdou, Beijing 102200 (CN)
(74) Representative: LLR
(86) International application number: PCT/CN2022/130873
(87) International publication number: WO 2023/088146

(57) **Abstract**

The invention discloses an integrated digital PCR instrument and a control method therefor. The integrated digital PCR instrument comprises a chip loading module (200); a droplet generation module (300), which can generate droplets (4) from a sample in a sample adding chamber (12) during the droplet generation process, and then the droplets being transferred and stored in a reaction chamber (11); a temperature cycle module (400), which enables the droplets (4) in the reaction chamber (11) to achieve amplification; a fluorescence detection module (500), which can transfer the droplets (4) in the reaction chamber (11) to a fluorescence detection area (33) during a process of detecting the droplets (4), then transfers the droplets to the sample adding chamber (12), and completes fluorescence detection of the droplets (4) during said process; a chip disposal module (600); and a scheduling mechanism (700), which is used for transferring an integrated droplet chip (100) among the chip loading module (200), the droplet generation module (300), the temperature cycle module (400), the fluorescence detection module (500) and the chip disposal module (600) under the control of a main control module (800), and can turn up and down by 180° the integrated droplet chip (100) in the temperature cycle module (400) and then transfers the integrated droplet chip into the fluorescence detection module (500). The degrees of automation and integration of the PCR instrument are high, which can improve detection and analysis operation efficiency and reduce labor costs.

## Description

### TECHNICAL FIELD

The present invention relates to the technical field of digital PCR instruments, and particularly relates to an integrated digital PCR instrument and control method thereof.

### BACKGROUND

The digital PCR is the latest quantitative technology, based on single molecule PCR method for counting nucleic acid quantification, which is an absolute quantification method. It mainly adopts the microfluidic or microtitration method in the current popular research field of analytical chemistry, in which a large amount of diluted nucleic acid solution is dispersed into microreactors or droplets of biochips, and the number of nucleic acid templates in each reactor is less than or equal to 1, so that after a PCR cycle, reactors with one nucleic acid molecule template will give a fluorescent signal, and reactors without a template will have no fluorescent signal. Based on the relative ratio and the volume of the reactor, the nucleic acid concentration of the original solution can be deduced. The traditional digital PCR instrument has a single function and requires the manual operation of multiple instruments to work together to complete a single amplification and detection. With the development of society, high throughput, automation, high speed, integration and the like of PCR analysis in the fields of medical industry and scientific research, higher requirements are provided.

### SUMMARY OF THE INVENTION

Therefore, the technical problem to be solved by the present invention is to provide an integrated digital PCR instrument and a control method therefor, so as to overcome the defects in the prior art that the function of a digital PCR instrument is single, multiple instruments need to be operated manually to complete one-time amplification and detection work, and the detection efficiency is low.

In order to solve the above-mentioned problems, the present invention provides an integrated digital PCR instrument, the integrated digital PCR instrument comprises a a chip loading module, which is used for placing an integrated droplet chip after sample adding, wherein the integrated droplet chip comprises a chip body, said chip body being constructed with a sample adding chamber, a reaction chamber and a fluorescence detection area;
a droplet generation module, which is used for supplying said integrated droplet chip with oil and gas, and can generate droplets from a sample in the sample adding chamber during the droplet generation process and then the droplets being transferred and stored in the reaction chamber;
a temperature cycle module, which is used for forming a heating and cooling cycle on the droplets in the reaction chamber to enable the amplification of the droplets in the reaction chamber;
a fluorescence detection module capable of transferring the droplets in the reaction chamber to the fluorescence detection area in the droplet detection process and then transferring the droplets to the sample adding chamber, and performing fluorescence detection on the droplets in the fluorescence detection area;
a chip disposal module for storing the detected integrated droplet chip; and
a scheduling mechanism, which is used for transferring the integrated droplet chip among the chip loading module, the droplet generation module, the temperature cycle module, the fluorescence detection module and the chip disposal module under the control of a main control module, and can turn up and down by 180° the integrated droplet chip in the temperature cycle module and then transfers the integrated droplet chip into the fluorescence detection module.

In some embodiments, the integrated droplet chip comprises a chip body, said chip body being constructed with a droplet generation structure, an oil-liquid interface and a gas-liquid interface, the gas-liquid interface is in communication with the reaction chamber, the sample adding chamber is in communication with the droplet generation structure, and the oil-liquid interface is in communication with the droplet generation structure;
when the integrated droplet chip is in the droplet generation module, the droplet generation module can form a first pressure difference between the sample adding chamber and the gas-liquid interface, and forming a second pressure difference between the oil-liquid interface and the gas-liquid interface, wherein the first pressure difference and the second pressure difference respectively drive the sample in the sample adding chamber and the generated oil of the oil-liquid interface to enter the droplet generation structure, and the generated droplets enter and are stored in the reaction chamber;
when the integrated droplet chip is in the fluorescence detection module, the droplet generation module can drive the detection pushing oil to enter the reaction chamber from the gas-liquid interface, so that the droplets in the reaction chamber flow out of the reaction chamber to the droplet generation structure, the droplet generation module is further capable of driving the detection separation oil to enter the droplet generation structure from the oil-liquid interface, and the detection separation oil separates the droplets flowing out of the reaction chamber into the droplet generation structure to form a queue, which enters the fluorescence detection area.

In some embodiments, the droplet generation structure comprises an oil-liquid pipeline and a communication pipeline, the oil-liquid pipeline intersects with the communication pipeline in a cross manner, the communication pipeline comprises a first pipeline located on a first side of the cross point and communicated with the reaction chamber, and a second pipeline located on a second side of the cross point and communicated with the sample adding chamber, and the oil-liquid interface is communicated with the oil-liquid pipeline.

In some embodiments, the reaction chamber and the sample adding chamber are located on the first side surface with reference to the first side surface of the chip body in a horizontal direction, and the connecting interface between the reaction chamber and the first side of the chip body extending upwards and forming a flared mouth with a small upper part and a large lower part.

In some embodiments, a gas-liquid pipeline extending from bottom to top is further configured in the reaction chamber, a lower opening of the gas-liquid pipeline is in communication with the gas-liquid interface, and an upper opening of the gas-liquid pipeline is higher than an upper opening of the connecting interface.

In some embodiments, a droplet observation area is provided between the first pipeline and the connecting interface.

In some embodiments, the fluorescence detection area is located on the second pipeline.

In some embodiments, the sample adding chamber comprises an opening chamber and a sealing cover hermetically connected to said opening; and/or the sample adding chamber is provided with a filter membrane or an exhaust hole.

In some embodiments, light oil is preset in the reaction chamber before the droplets enter the reaction chamber.

In some embodiments, a control method for an integrated digital PCR instrument is provided, which comprises the following steps:
a chip loading step, placing an integrated droplet chip into a chip loading module;
a droplet generation step, transferring the integrated droplet chip from the chip loading module into a droplet generation module, and controlling the sample in the sample adding chamber of the integrated droplet chip to generate a droplet and then storing the droplet in the reaction chamber;
a temperature cycle step, forming a heating and cooling cycle for the droplets in the reaction chamber at the bottom of the integrated droplet chip after the integrated droplet chip has been turned up and down 180°;
a fluorescence detection step, controlling the droplets in the reaction chamber to enter the fluorescence detection area and complete fluorescence detection after the droplets in the reaction chamber are amplified, and
a chip disposal step, after fluorescence detection, transferring the integrated droplet chip into the chip disposal module.

The present invention provides an integrated digital PCR instrument and a control method thereof, under the control of the main control module, the scheduling mechanism can coordinate and operate the integrated droplet chip among the different functional modules, so that chip loading, droplet generation, PCR amplification, fluorescence detection and analysis are realized until chip disposal full-process integrated operation is realized, the automation degree and the integration degree are high, the efficiency of detection and analysis operation can be improved, and the labor cost is reduced.

### BRIEF DESCRIPTION OF THE DRAWINGS

FIG. 1 is a schematic structural diagram of an integrated digital PCR instrument according to an embodiment of the present invention;
FIG. 2 is a schematic perspective view of the integrated droplet chip of FIG. 1;
FIG. 3 is a schematic structural diagram of the droplet generation structure in FIG. 2;
FIG. 4 is a schematic diagram of a droplet generation process;
FIG. 5 is a schematic view of the droplets stored in the reaction chamber after being generated;
FIG. 6 is a schematic diagram of the state in the reaction chamber after the integrated droplet chip in FIG. 1 is turned up and down by 180°;
FIG. 7 is a schematic diagram of the state in which the oil is introduced into the reaction chamber in the state of FIG. 6 (the arrows show the flow direction of the droplets and the oil);
FIG. 8 is a schematic diagram of the state of the droplets forced out of the reaction chamber;
Figure 9 is a schematic diagram of the operating optical path of the fluorescence detection module in Figure 1;
FIG. 10 is a detection result of a digital PCR instrument according to an embodiment of the present invention.

The reference numeral is expressed as:
1. chip body, 11. reaction chamber, 111. connecting interface, 112. gas-liquid pipeline, 12. sample adding chamber, 121. opening chamber, 122. sealing cover, 21. oil-liquid pipeline, 22. first pipeline, 23. second pipeline, 31. oil-liquid interface, 32. gas-liquid interface, 33. fluorescence detection area, 34. droplet observation area, 4. droplet, 5. detection pushing oil, 91. excitation light source, 92. excitation light, 93. fluorescence, 94. light splitting path, 95. fluorescence detection unit, 100. integrated droplet chip, 200. chip loading module, 300. droplet generation module, 400. temperature cycle module, 500, fluorescence detection module, 600, chip disposal module; 700, scheduling mechanism; 800 main control module.

### DETAILED DESCRIPTION OF THE EMBODIMENTS

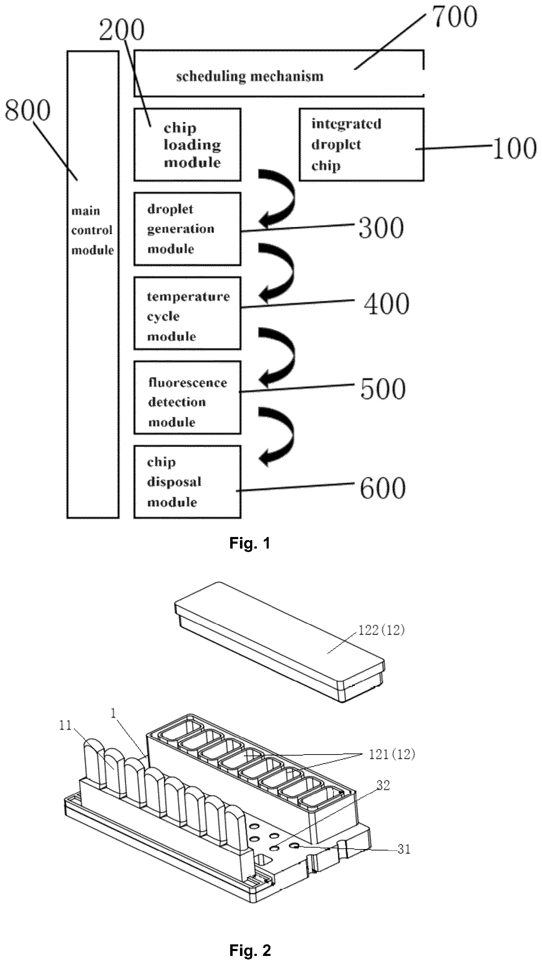

Referring to FIG. 1 to FIG. 10, according to an embodiment of the present invention, an integrated digital PCR instrument is provided, comprising: a chip loading module 200, which is used for placing an integrated droplet chip 100 after sample adding, the integrated droplet chip 100 comprises a chip body 1, said chip body 1 being constructed with a sample adding chamber 12, a reaction chamber 11 and a fluorescence detection area 33; a droplet generation module (300), which is used for supplying said integrated droplet chip 100 with oil and gas (i.e, oil or pressure gas), and can generate droplets 4 from a sample in the sample adding chamber 12 during the droplet generation process and then transfers and stores the droplets in the reaction chamber 11; a temperature cycle module 400, which is used for forming a heating and cooling cycle on the droplets 4 in the reaction chamber 11 to enable the amplification of the droplets 4 in the reaction chamber 11; a fluorescence detection module 500 capable of transferring the droplets 4 in the reaction chamber 11 to the fluorescence detection area 33 in the droplet detection process and then transferring the droplets to the sample adding chamber 12, and performing fluorescence detection on the droplets 4 in the fluorescence detection area 33; a chip disposal module 600 for storing the detected integrated droplet chip 100; and a scheduling mechanism 700, which is used for transferring the integrated droplet chip 100 among the chip loading module 200, the droplet generation module 300, the temperature cycle module 400, the fluorescence detection module 500 and the chip disposal module 600 under the control of a main control module 800, and can turn up and down by 180° the integrated droplet chip 100 in the temperature cycle module 400 and then transfers the integrated droplet chip into the fluorescence detection module 500. In the technical solution, under the control of the main control module 800, the scheduling mechanism 700 can coordinate and operate the integrated droplet chip 100 among various functional modules, thereby achieving chip loading, droplet generation, PCR amplification, fluorescence detection and analysis until chip disposal full-process integrated operation is achieved, the automation degree and the integration degree are high, the efficiency of detecting and analyzing the operation can be improved, the labor cost is reduced, and more importantly, the scheduling mechanism 700 in the present invention can be configured to turn the integrated droplet chip 100 up and down by 180 degrees, so that the droplets are generated, and the operation flow of PCR amplification and fluorescence detection analysis can be integrated on the same chip, that is, the integration level and the automation degree can be further improved.

In some embodiments, the integrated droplet chip 100 comprises a chip body 1, said chip body 1 being constructed with a droplet generation structure, an oil-liquid interface 31 and a gas-liquid interface 32, the gas-liquid interface 32 is in communication with the reaction chamber 11, the sample adding chamber 12 is in communication with the droplet generation structure, and the oil-liquid interface 31 is in communication with the droplet generation structure; when the integrated droplet chip 100 is in the droplet generation module 300, the droplet generation module 300 can form a first pressure difference between the sample adding chamber 12 and the gas-liquid interface 32 (that is, the gas path of the droplet generation module 300 is in communication with the sample adding chamber 12 and the gas-liquid interface 32, and forming a second pressure difference between the oil-liquid interface 31 and the gas-liquid interface 32 (that is, the liquid path of the droplet generation module 300 is in communication with the oil-liquid interface 31 and the gas-liquid interface 32), the first pressure difference and the second pressure difference respectively drive the sample in the sample adding chamber 12 and the generated oil of the oil-liquid interface 31 to enter the droplet generation structure, and the generated droplet 4 enters and is stored in the reaction chamber 11; when the integrated droplet chip 100 is in the fluorescence detection module 500, the droplet generation module 300 can drive the detection pushing oil 5 to enter the reaction chamber 11 from the gas-liquid interface 32, so that the droplets 4 in the reaction chamber 11 flow out of the reaction chamber 11 to the droplet generation structure, the droplet generation module 300 is further capable of driving the detection separation oil to enter the droplet generation structure from the oil-liquid interface 31, and the detection separation oil separates the droplets 4 flowing out of the reaction chamber 11 into the droplet generation structure to form a queue, and enters the fluorescence detection area 33. Through the time-divisional multiplexing of said droplet generation structure (with the time-divisional boundary before and after the turning of the integrated droplet chip 100), droplet generation, amplification and detection are all integrated in one chip, realizing a fully integrated and closed digital PCR process, which not only inherits the advantages of uniform droplet size, less restrictive droplet number and high signal-to-noise ratio of fluorescence detection, but also overcomes the difficulties of the original chip structure which is complex, with generation and detection done in different chips, low integration and difficult to automate, and the application is an important technological breakthrough in the field of digital PCR.

As a specific embodiment of said droplet generating structure, the droplet generation structure comprises an oil-liquid pipeline 21 and a communication pipeline, the oil-liquid pipeline 21 intersects with the communication pipeline in a cross manner, the communication pipeline comprises a first pipeline 22 located on a first side of the cross-shaped intersection point and communicated with the reaction chamber 11, and a second pipeline 23 located on a second side of the cross-shaped intersection point and communicated with the sample adding chamber 12, and the oil-liquid interface 31 is in communication with the oil-liquid pipeline 21.

In some embodiments, referring to FIG. 2, with reference to the first side surface of the chip body 1 in a horizontal direction, the reaction chamber 11 and the sample adding chamber 12 are located on the first side surface, the reaction chamber 11 and the connecting interface 111 of the first side surface of the chip body 1 extend upwards to form a flared mouth with a small upper part and a large lower part, and the connecting interface 111 of the flared mouth can facilitate the entry of droplets 4 from said first pipeline 22 into said reaction chamber 11 and also facilitates the entry of said droplets 4 from said reaction chamber 11 into said first pipeline 22, preventing the retention of droplets 4. It should be noted that the reaction chamber 11 and the sample adding chamber 12 at this time are both located on the first side surface (specifically the top surface) of the chip body 1, and the droplets 4 entering the reaction chamber 11 are all gathered at the connecting interface 111, and when PCR amplification is performed, the chip body 1 needs to be integrally inverted, i.e., turned over 180°, so that the droplets 4 can be located in the reaction area of the reaction chamber 11.

In some embodiments, a gas-liquid pipeline 112 extending from bottom to top is further configured in the reaction chamber 11, a lower opening of the gas-liquid pipeline 112 is communicated with the gas-liquid interface 32, and an upper opening of the gas-liquid pipeline 112 is higher than an upper opening of the connecting interface 111, so that when a negative pressure is formed in the reaction chamber 11, the droplets 4 generated by the droplet generation structure further flow out from the gas-liquid pipeline 112 after entering the reaction chamber 11.

In some embodiments, a droplet observation area 34 is provided between the first pipeline 22 and the connecting interface 111, and the flow area of the droplet observation area 34 is far greater than the flow area of the first pipeline 22, that is, the droplet observation area 34 is an area enlarged on the first pipeline 22 (the width is increased), so that the flow rate of the droplets 4 entering the area is reduced, thereby facilitating imaging of an external camera, recording the form of the droplet, and determining whether the state of the droplet generation process is normal.

In one embodiment, the fluorescence detection area 33 is located on the second pipeline 23, and on the second pipeline 23, the droplets 4 flowing out of the reaction chamber 11 can be separated into a droplet queue with a proper distance under the action of the detection oil in the oil-liquid pipeline 21 when passing through the cross-shaped intersection, so that fluorescence detection is completed under the action of an external system.

As a specific embodiment, the sample adding chamber 12 comprises an opening chamber 121 and a sealing cover 122 connected to the opening of the opening chamber 121 in a sealing manner, so that an operator can add a sample into the sample adding chamber 12. Further, the sample adding chamber 12 is provided with a filter membrane or an exhaust hole, and when the sample adding chamber 12 becomes a disposal liquid pool (that is, when the droplet chip is turned over and inverted), a certain amount of air is excluded to prevent the accumulation of pressure in the sample adding chamber 12.

In some embodiments, before the droplet 4 enters the reaction chamber 11, light oil (i.e., oil liquid with a small density) is preset in the reaction chamber 11, so that it is ensured that the light oil can be always located at the top of the droplet 4 in the reaction chamber 11, the problem of droplet evaporation during amplification is solved, and no-heat-cover PCR is achieved.

According to an embodiment of the present invention, further provided is a control method for an integrated digital PCR instrument, comprising the following steps:
a chip loading step, placing an integrated droplet chip 100 into a chip loading module 200;
a droplet generation step, transferring the integrated droplet chip 100 from the chip loading module 200 into a droplet generation module 300, and controlling the sample in the sample adding chamber 12 of the integrated droplet chip 100 to generate a droplet 4 and then storing the droplet 4 in the reaction chamber 11;
a temperature cycle step, forming a heating and cooling cycle for the droplets 4 within the droplets in the reaction chamber 11 at the bottom of the integrated droplet chip 100 after the integrated droplet chip 100 has been turned up and down 180°;
a fluorescence detection step, controlling the droplets in the reaction chamber 11 to enter the fluorescence detection area 33 and complete fluorescence detection after the droplets in the reaction chamber 11 are amplified, and
a chip disposal step, transferring the integrated droplet chip after fluorescence detection into the chip disposal module.

The working principle of the integrated digital PCR instrument of the present invention is further described below with reference to a specific embodiment.

Step 1, 30 microliters of a system (i.e., a sample) is added to the sample adding chamber 12, and 30 microliters of PCR system comprises 10 microliters of ddPCR Supermix for Probes, 5 microliters of GJB2 gene upstream and downstream primer reagents and 5 microliters of template containing 1 ng of genomic DNA. As shown in FIG. 2 as a whole, the integrated droplet chip 100 includes eight parallel independent droplet chip structures, each structure includes a sample adding chamber 12, an oil-liquid interface 31, a gas-liquid interface 32, a droplet generation structure, and a reaction chamber 11, and then the sealing cover 122 is covered or bonded, so that the sample adding chamber 12 is sealed, and the sample adding chamber 12 is preferably provided with an exhaust hole with a filter membrane or a small aperture.

Step 2, the integrated droplet chip added with the sample is manually placed in the chip loading module 200 of the integrated digital PCR instrument, and then the cabin door is closed to start the instrument flow.

Step 3, after the scheduling mechanism 700 scans and confirms the state of the integrated droplet chip 100, the scheduling mechanism 700 grabs the integrated droplet chip 100 from the chip loading module 200 and transfers the integrated droplet chip 100 into the droplet generation module 300.

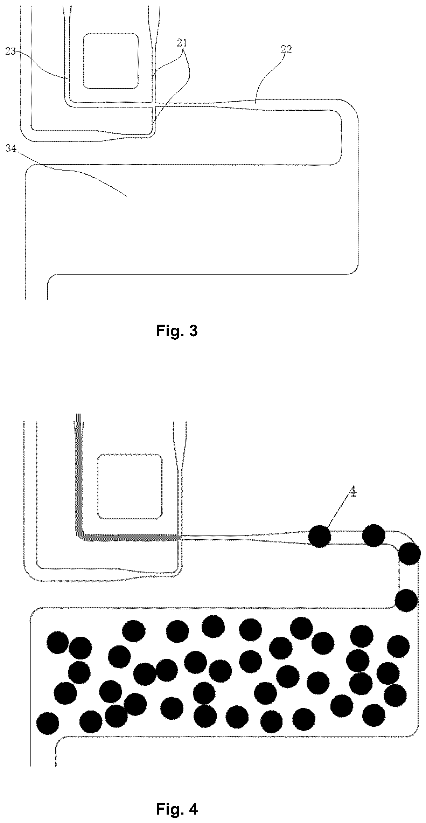

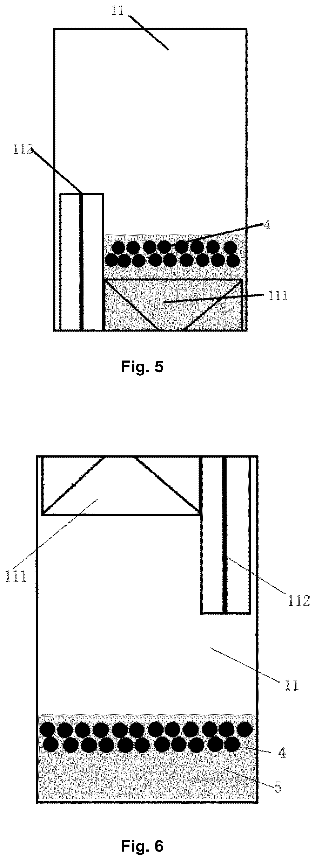

Step 4, preparing droplet is performed in the droplet generation module 300, as shown in FIG. 3 and FIG. 4. First, the generation oil (Bio-Rad Generation Oil) required for droplet generation is supplied to the oil-liquid interface 31, and the generated oil contains a surfactant capable of stabilizing the liquid droplets; a negative pressure is provided to the gas-liquid interface 32, and the pressure is as high as -200 mBar, so that a pressure difference is formed with the sample adding chamber 12 and the oil-liquid interface 31. The sample adding chamber 12 is connected with the second pipeline 23 in the droplet generation structure, the oil-liquid interface 31 is connected with the oil-liquid pipeline 21 in the droplet generation structure, the first pipeline 22 and the gas-liquid interface 32 are both connected with the reaction chamber 11, the first pipeline 22 is connected with the connecting interface 111, and the gas-liquid interface 32 is connected with the gas-liquid pipeline 112. As shown in FIG. 2, each part of the droplet generation structure is provided with two branches which are respectively located at two sides of the second pipeline 23 and the first pipeline 22 and are both connected to the oil-liquid interface 31. Under the driving of the pressure difference, the reaction system enters the second pipeline 23 and the generation oil enters the oil-liquid pipeline 21, they intersect at the cross-shaped structure, and form a water-in-oil droplet with a uniform size under the action of the fluid shearing force and the surface tension. The depth of the cross pipe is about 70 microns, the width is 80 microns, and the droplet size is about 100 microns. The droplets enter the first pipeline 22 and reduce the flow rate after entering the droplet observation area 34, so as to form dense droplet groups, which is convenient for camera imaging and recording, and the principle diagram of the droplet generation process is shown in FIG. 4. After flowing through the first pipeline 22, the generated droplets reach the bottom of the connecting interface 111 of the reaction chamber 11 with a slope structure (i.e., the foregoing flared mouth), and the bottom of the slope is communicated with the first pipeline 22. At the end of the droplet generation process, the pressure difference applied at the chip interface is removed, and at this time, the droplet should still be located below the gas-liquid pipeline 112, as shown in FIG. 5.

Step 5: After the droplet preparation is completed, the scheduling mechanism 700 takes out the chip from the droplet generation module 300 and turns the chip up and down, so that the droplet is transferred from the connecting interface 111 to the reaction area (i.e., away from the connecting interface 111), as shown in FIG. 6.

Step 6, the scheduling mechanism 700 places the flipped chip as described in the temperature cycle module 400. The structure of the reaction area should adopt a design with high heat transfer efficiency, such as a flat design with high depth and thin thickness, and the temperature cycle module 400 heats and cools the reaction area from the left side and the right side, which not only ensures that the temperature conduction distance is short, but also ensures a large contact area, thereby achieving efficient heat transfer. In the present embodiment, the temperature cycle flow is pre-denaturation at 95°C for 10 minutes, followed by 40 temperature cycles, each with 95°C for 5 seconds, 60°C for 15 seconds and a final 4°C holding time. In order to reduce evaporation, 30 microliters of a low density anti-volatile reagent reagents (e.g. light oil as described) may be placed in advance within the reaction chamber 11.

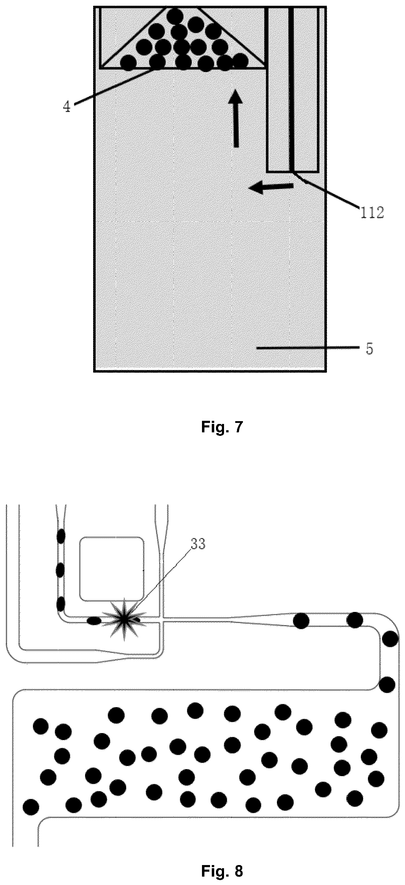

Step 7, after the amplification reaction is completed, the scheduling mechanism 700 transfers the chip from the temperature cycle module 400 to the fluorescence detection module 500 for droplet fluorescence detection. The fluorescence detection module 500 injects the detection oil into the gas-liquid interface 32, continuously fills the reaction chamber 11 in this process, and then passes through the slope of the connecting interface 111 and enters the first pipeline 22, as shown in FIG. 7. When the droplets pass through the observation area in the first pipeline 22, the camera can also be used to perform bright field imaging on the droplets, so as to evaluate the droplet state after the amplification reaction. At the same time, the fluorescence detection module 500 injects detection oil into the oil-liquid interface 31, the detection oil is converged with the droplet queue at the cross-shaped pipeline through the oil-liquid pipeline 21, and the closely arranged liquid drops are separated into a droplet queue having a suitable spacing. The droplet queue sequentially passes through the fluorescence detection area 33 of the second pipeline 23, as shown in FIG. 8.

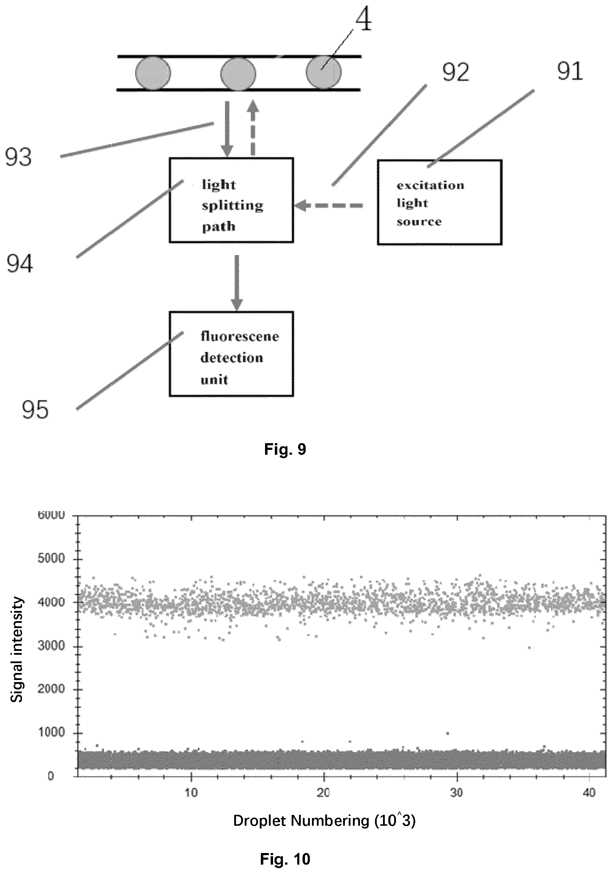

The position corresponding to the fluorescence detection area 33 is the fluorescence detection focus of the fluorescence detection module 500. The fluorescence detection process is shown in Figure 9, the excitation light source 91 of the fluorescence detection module 500 focuses the excitation light 92, such as laser or LED narrowband light having a wavelength of 488 nm and 532 nm, into the fluorescence detection area 33 by means of the light splitting path 94, and the fluorescence 93 excited in the droplet is also received by the light splitting path 94 and is distributed to the fluorescence detection unit 95 for collection, so as to obtain the fluorescence information of each droplet, as shown in FIG. 10. By using the fluorescence information of the droplet, the signal threshold is defined, the negative and positive of the droplet are distinguished, and the copy number of the target molecule in the sample is calculated by using the Poisson distribution model. Finally, the liquid drops subjected to fluorescence detection enter the sample adding chamber 12, which is already sealed by the sealing cover 122, and therefore does not come into contact with the environment outside the chip, eliminating the possibility of aerosol contamination and enabling a fully closed digital PCR process.

Step 8, after all samples are detected, the scheduling mechanism 700 removes the chip from the fluorescence detection module 500, and transfers the chip to the chip disposal module 600 to complete the whole digital PCR detection process.

It will be readily appreciated by those skilled in the art that the above-mentioned advantages can be freely combined and superimposed, provided that they do not conflict with each other.

The above is only a preferred embodiment of the present invention and is not intended to limit the present invention, and any modifications, equivalent substitutions and improvements etc. made within the spirit and principles of the present invention shall be included within the scope of protection of the present invention. The above is only a preferred embodiment of the present invention. It should be noted that for a person of ordinary skill in the art, a number of improvements and variations can be made without departing from the technical principles of the present invention, and these improvements and variations shall also be considered within the scope of protection of the present invention.

## Claims

1. An integrated digital PCR instrument **characterized in that** it comprises:
a chip loading module (200), which is used for placing an integrated droplet chip (100) after sample adding, wherein the integrated droplet chip (100) comprises a chip body (1), said chip body (1) being constructed with a sample adding chamber (12), a reaction chamber (11) and a fluorescence detection area (33);
a droplet generation module (300), which is used for supplying said integrated droplet chip (100) with oil and gas, and can generate droplets (4) from a sample in the sample adding chamber (12) during the droplet generation process and then the droplets being transferred and stored in the reaction chamber (11);
a temperature cycle module (400), which is used for forming a heating and cooling cycle on the droplets (4) in the reaction chamber (11) to enable the amplification of the droplets (4) in the reaction chamber (11);
a fluorescence detection module (500) capable of transferring the droplets (4) in the reaction chamber (11) to the fluorescence detection area (33) in the droplet detection process and then transferring the droplets to the sample adding chamber (12), and performing fluorescence detection on the droplets (4) in the fluorescence detection area (33);
a chip disposal module (600) for storing the detected integrated droplet chip (100); and
a scheduling mechanism (700), which is used for transferring the integrated droplet chip (100) among the chip loading module (200), the droplet generation module (300), the temperature cycle module (400), the fluorescence detection module (500) and the chip disposal module (600) under the control of a main control module (800), and can turn up and down by 180° the integrated droplet chip (100) in the temperature cycle module (400) and then transfers the integrated droplet chip into the fluorescence detection module (500).

2. The integrated digital PCR instrument according to claim 1, wherein the integrated droplet chip (100) comprises a chip body (1), said chip body (1) being constructed with a droplet generation structure, an oil-liquid interface (31) and a gas-liquid interface (32), the gas-liquid interface (32) is in communication with the reaction chamber (11), the sample adding chamber (12) is in communication with the droplet generation structure, and the oil-liquid interface (31) is in communication with the droplet generation structure;
when the integrated droplet chip (100) is in the droplet generation module (300), the droplet generation module (300) can form a first pressure difference between the sample adding chamber (12) and the gas-liquid interface (32), and forming a second pressure difference between the oil-liquid interface (31) and the gas-liquid interface (32), wherein the first pressure difference and the second pressure difference respectively drive the sample in the sample adding chamber (12) and the generated oil of the oil-liquid interface (31) to enter the droplet generation structure, and the generated droplets (4) enter and are stored in the reaction chamber (11);
when the integrated droplet chip (100) is in the fluorescence detection module (500), the droplet generation module (300) can drive the detection pushing oil (5) to enter the reaction chamber (11) from the gas-liquid interface (32), so that the droplets (4) in the reaction chamber (11) flow out of the reaction chamber (11) to the droplet generation structure, the droplet generation module (300) is further capable of driving the detection separation oil to enter the droplet generation structure from the oil-liquid interface (31), and the detection separation oil separates the droplets (4) flowing out of the reaction chamber (11) into the droplet generation structure to form a queue, which enters the fluorescence detection area (33).

3. The integrated digital PCR instrument according to claim 2, wherein the droplet generation structure comprises an oil-liquid pipeline (21) and a communication pipeline, the oil-liquid pipeline (21) intersects with the communication pipeline in a cross manner, the communication pipeline comprises a first pipeline (22) located on a first side of the cross point and communicated with the reaction chamber (11), and a second pipeline (23) located on a second side of the cross point and communicated with the sample adding chamber (12), and the oil-liquid interface (31) is communicated with the oil-liquid pipeline (21).

4. The integrated digital PCR instrument according to claim 3, wherein the reaction chamber (11) and the sample adding chamber (12) are located on the first side surface with reference to the first side surface of the chip body (1) in a horizontal direction, and the connecting interface (111) between the reaction chamber (11) and the first side of the chip body (1) extending upwards and forming a flared mouth with a small upper part and a large lower part.

5. The integrated digital PCR instrument according to claim 4, wherein a gas-liquid pipeline (112) extending from bottom to top is further configured in the reaction chamber (11), a lower opening of the gas-liquid pipeline (112) is in communication with the gas-liquid interface (32), and an upper opening of the gas-liquid pipeline (112) is higher than an upper opening of the connecting interface (111).

6. The integrated digital PCR instrument according to claim 5, wherein a droplet observation area (34) is provided between the first pipeline (22) and the connecting interface (111).

7. The integrated digital PCR instrument according to claim 3, wherein the fluorescence detection area (33) is located on the second pipeline (23).

8. The integrated digital PCR instrument according to claim 1, wherein the sample adding chamber (12) comprises an opening chamber (121) and a sealing cover (122) hermetically connected to said opening; and/or the sample adding chamber (12) is provided with a filter membrane or an exhaust hole.

9. The integrated digital PCR instrument according to claim 1, wherein light oil is preset in the reaction chamber (11) before the droplets (4) enter the reaction chamber (11).

10. A control method for an integrated digital PCR instrument is **characterized by** comprising the following steps:
a chip loading step, placing an integrated droplet chip (100) into a chip loading module (200);
a droplet generation step, transferring the integrated droplet chip (100) from the chip loading module (200) into a droplet generation module (300), and controlling the sample in the sample adding chamber (12) of the integrated droplet chip (100) to generate a droplet (4) and then storing the droplet (4) in the reaction chamber (11);
a temperature cycle step, forming a heating and cooling cycle for the droplets (4) in the reaction chamber (11) at the bottom of the integrated droplet chip (100) after the integrated droplet chip (100) has been turned up and down 180°;
a fluorescence detection step, controlling the droplets in the reaction chamber (11) to enter the fluorescence detection area (33) and complete fluorescence detection after the droplets in the reaction chamber (11) are amplified, and
a chip disposal step, after fluorescence detection, transferring the integrated droplet chip into the chip disposal module.
